Europäisches Patentamt

European Patent Office

Office européen des brevets

(11) Publication number: **0 203 395**
**B1**

(12) **EUROPEAN PATENT SPECIFICATION**

(45) Date of publication of patent specification: **16.08.90**

(51) Int. Cl.⁵: **F 16 H 21/18**

(21) Application number: **86105845.1**

(22) Date of filing: **28.04.86**

(54) **Device for converting linear motion to rotary motion or vice versa.**

(30) Priority: **15.05.85 US 734454**

(43) Date of publication of application:
**03.12.86 Bulletin 86/49**

(45) Publication of the grant of the patent:
**16.08.90 Bulletin 90/33**

(84) Designated Contracting States:
**AT BE CH DE FR GB IT LI LU NL SE**

(56) References cited:
**DE-A-1 939 096**
**DE-C- 336 037**
**DE-C- 420 474**
**GB-A- 11 385**
**GB-A-2 121 503**

(73) Proprietor: **Brackett, Douglas C.**
**33 Wildwood Drive**
**Cape Elizabeth Maine 04107 (US)**

(72) Inventor: **Brackett, Douglas C.**
**33 Wildwood Drive**
**Cape Elizabeth Maine 04107 (US)**

(74) Representative: **Eschmann, Heinz et al**
**A. Braun, Braun, Héritier, Eschmann AG**
**Patentanwälte Holbeinstrasse 36-38**
**CH-4051 Basel (CH)**

Courier Press, Leamington Spa, England.

## Description

The present invention relates to a device for converting linear motion to rotary motion or vice versa, and, more particularly, to such devices which are especially adapted for use in connection with piston-driven machines. A device in accordance with the preamble of claim 1 is known from DE—C—336037. There the shuttle comprises two parts mounted on a separate guide rod and resiliently connected. The bearing members are in the form of balls constituting a normal ball bearing.

Further conventional crankshaft/scotch yoke mechanisms have been used for many years to convert linear motion into rotary motion and vice versa. In such mechanisms, the reciprocating linear movement of the piston or pistons causes the rotary movement of a crankshaft by causing a crankpin-mounted roller or bearing to move back and forth along a slot formed in a single yoke extending from the piston to pistons (see, for instance, U.S. Patent Nos. 2,404,906, 2,628,602 and 3,517,652; British Patent Nos. 112,767, 152,799 and 533,047 and German Patent No. 548,082). To prevent jamming of the roller or bearing, a spacing must be provided between the roller or bearing and at least one bearing surface of the slot of the yoke. Such a spacing is disadvantageous because it causes backlash (i.e., lost motion between the linear movement of the yoke/piston or pistons, on the one hand, and the rotary movement of the crankpin/crankshaft, on the other hand), which results in burnelling, spalling and/or undesired vibrations. Burnelling, spalling and/or undesired vibrations cause, in turn, wear and material fatigue and deterioration.

U.S. Patent Nos. 963,449 and 4,339,960 disclose crankshaft/scotch yoke mechanisms which are specifically designed for use in Stirling-type engines. These mechanisms employ a single crankpin and a plurality of slotted yokes. The crankpin is provided with one or more rollers or bearings, each roller or bearing translating its motion to one or more slotted yokes. Because each roller or bearing is captured in a slot of one or more of the yokes, a spacing must be provided between the roller or bearing and at least one bearing surface of the slot or slots in order to prevent jamming. The provision of such a spacing creates the same wear, fatigue and deterioration problems discussed above.

The present invention as defined in claim 1 relates to a new and improved device for converting linear motion to rotary motion or vice versa without the problems and disadvantages of the prior art devices described above. More particularly, the new and improved device includes at least two bearing members which are rotatably mounted on a crankpin of a rotatable crank. Each bearing member is in constant engagement with its own individual bearing surface, which is part of a shuttle mounted for reciprocating linear movement. The bearing surfaces are arranged on opposite sides of the crankpin such that they are offset relative to each other in a direction which is parallel to a longitudinal axis of the crankpin. Because the bearing members are in constant engagement with their associated bearing surfaces, the linear motion of the shuttle is continuously converted into the rotary motion of the crank or vice versa to thereby eliminate backlash and its accompanying wear, fatigue and deterioration problems and disadvantages.

By restricting each bearing surface to its respective side of the crankpin, each bearing member is unrestricted on one side of the crankpin. Accordingly, in direct contrast to the prior art devices discussed above, the bearing members are not constrained within slots whereby the backlash problems associated with such prior art devices is avoided.

For use in connection with piston-driven machines, the shuttle is provided with one or more pistons, each piston being mounted for reciprocating linear movement in a corresponding cylinder. Each piston can be formed integrally with the shuttle or, alternatively, can be removably fastened to the shuttle. Similarly, the bearing surfaces can be formed integrally with the shuttle or, alternatively, can be removably fastened to the shuttle. If the bearing members and the bearing surfaces are removable, the bearing members and the bearing surfaces can be provided as separate interchaneable sets. By changing these sets, the linear speed of the shuttle relative to the angular speed of the crank can be varied.

For a better understanding of the present invention, reference is made to the following description of various exemplary embodiments of the invention considered in conjunction with the accompanying drawings, in which:

Figure 1 is an exploded perspective view of a piston engine which incorporates one embodiment of the present invention;

Figure 2 is a schematic perspective view of a portion of the embodiment illustrated in Figure 1;

Figure 3a is a schematic elevational view of another embodiment of the present invention;

Figure 3b is a cross-sectional view, taken along line III—III of Figure 3a and looking in the direction of the arrows, of the embodiment illustrated in Figure 3a;

Figure 4a is a schematic elevational view of a further embodiment of the present invention;

Figure 4b is a cross-sectional view, taken along line IV—IV of Figure 4a and looking in the direction of the arrows, of the embodiment illustrated in Figure 4a;

Figure 5a is a schematic elevational view of yet another embodiment of the present invention; and

Figure 5b is a cross-sectional view, taken along line V—V of Figure 5a and looking in the direction of the arrows, of the embodiment illustrated in Figure 5a.

Although the present invention is applicable to many different types of machines (such as compactors, pumps, motors, punch presses, robots, sewing machines, generators, locks, engines and compressors) in which linear motion is converted to rotary motion or vice versa, it is especially suitable for use in connection with piston engines. Accordingly, the present invention will be described in connection with a piston engine.

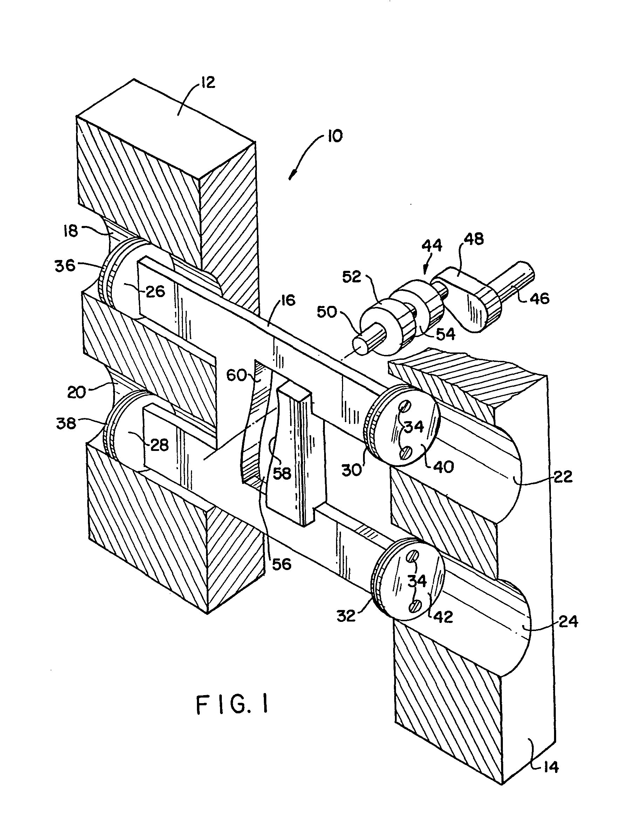

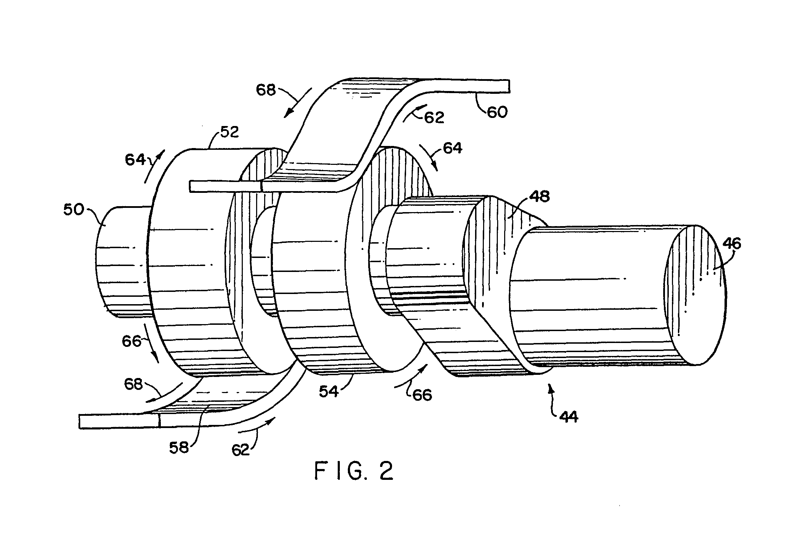

Referring to Figures 1 and 2, a piston engine 10 includes a pair of cylinder blocks 12, 14 and a piston shuttle 16. The cylinder block 12 is provided with a pair of cylinders 18, 20, while the cylinder block 14 is provided with a pair of cylinders 22, 24. The shuttle 16 includes a first pair of pistons 26, 28 mounted for reciprocating linear motion in the cylinders 18, 20, respectively, and a second pair of pistons 30, 32 mounted for reciprocating linear motion in the cylinders 22, 24, respectively. The pistons 26, 28, 30, 32 are fastened to the shuttle 16 by screws 34, which are threadedly received in holes (not shown) provided in faces 36, 38, 40, 42 of the pistons 26, 28, 30, 32, respectively, and extending into the shuttle 16. Because the screws 34 are located in the piston faces 36, 38, 40, 42, they are accessible through the cylinders 18, 20, 22, 24 so that the pistons 26, 28, 30, 32 can be detached from the shuttle 16 without removing the shuttle 16 from the engine 10.

A crank 44 is operatively associated with the shuttle 16. More particularly, the crank 44 includes a crankshaft 46, a crankarm 48 mounted for conjoint rotation with the crankshaft 46, and a crankpin 50 mounted for conjoint rotation with the crankshaft 46, the crankpin 50 and the crankshaft 46 being offset relative to each other. Bearing members 52, 54 are rotatably mounted on the crankpin 50, which extends through an opening 56 provided in the shuttle 16 such that the bearing member 52 is in constant engagement with a bearing surface 58 located on one side of the shuttle 16 and the bearing member 54 is in constant engagement with a bearing surface 60 located on an opposite side of the shuttle 16.

In operation, as the pistons 26, 28, 30, 32 reciprocate linearly in the cylinders 18, 20, 22, 24, respectively, the bearing members 52, 54 move back and forth along the bearing surfaces 58, 60, respectively. More particularly, as the bearing members 52, 54 roll along the bearing surfaces 58, 60, respectively, in a first direction (indicated by arrows 62 in Figure 2), the bearing members 52 rotates in one arcuate direction (indicated by arrows 64 in Figure 2) and the bearing member 54 rotates in an opposite arcuate direction (indicated by arrows 66 in Figure 2). As the bearing members 52, 54 roll along the bearing surfaces 58, 60, respectively, in a second direction (indicated by arrows 68 in Figure 2), the bearing member 52 rotates in the arcuate direction indicated by the arrows 66 and the bearing member 54 rotates in the arcuate direction indicated by the arrows 64. Because the bearing members 52, 54 are in constant engagement with the bearing surfaces 58, 60, respectively, as the bearing members 52, 54 move back and forth along the bearing surfaces 58, 60, respectively, the linear motion of the shuttle 16 is continuously converted into the rotary motion of the crank 44 to thereby eliminate backlash.

In order to improve the operation of the engine 10, it may be equipped with a lubrication system (not shown) by which a thin film of oil or some other lubricant is interposed between the bearing members 52, 54 and the bearing surfaces 58, 60, respectively. Despite the provision of such an oil film, the bearing members 52, 54 are still, for all intents and purposes, in constant engagement with the bearing surfaces 58, 60, respectively.

The pistons 26, 28, 30, 32 cooperate with the cylinders 18, 20, 22, 24 to guide the shuttle 16 during its reciprocating linear movement. If the shuttle 16 were pistonless, other means could be provided in order to guide the shuttle 16.

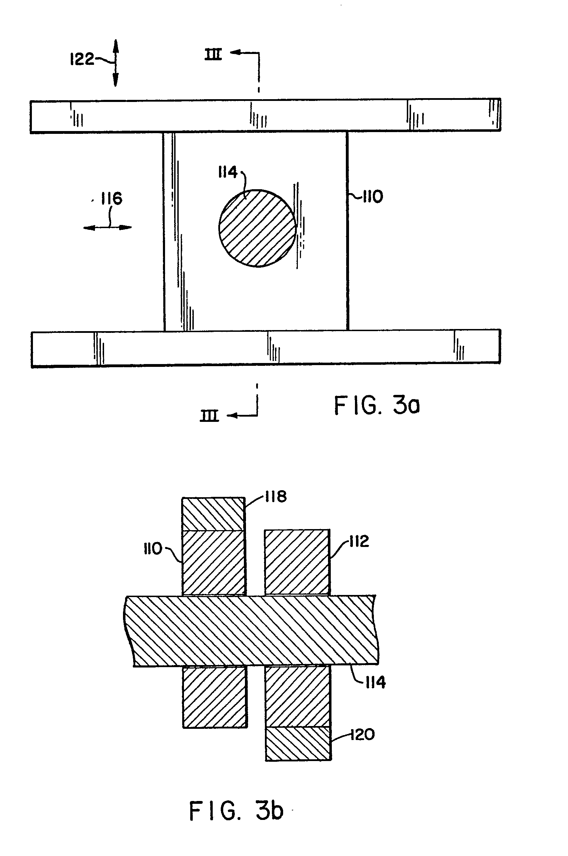

Although the bearing surfaces 58, 60 have a compound/complex shape (i.e, a combination of straight and curved) and the bearing members 52, 54 are round (i.e., in the form of rollers), other bearing surface and member configurations can be employed. Such other bearing surface and member configurations are illustrated in Figures 3a, 3b, 4a, 4b, 5a and 5b, Unless otherwise indicated, the embodiments of Figures 3a, 3b, 4a, 4b, 5a and 5b operate in the same manner as the embodiment of Figures 1 and 2.

With reference to Figures 3a and 3b, square bearing members 110, 112 are rotatably mounted on a crankpin 114 for reciprocating linear movement in a direction indicated by arrow 116. The bearing members 110, 112 are in constant engagement with flat bearing surfaces 118, 120, respectively, formed integrally with a common shuttle (not shown). As the shuttle reciprocates linearly in a direction indicated by arrow 122, the bearing members 110, 122 slide back and forth along the bearing surfaces 118, 120, respectively, in the direction indicated by the arrow 116.

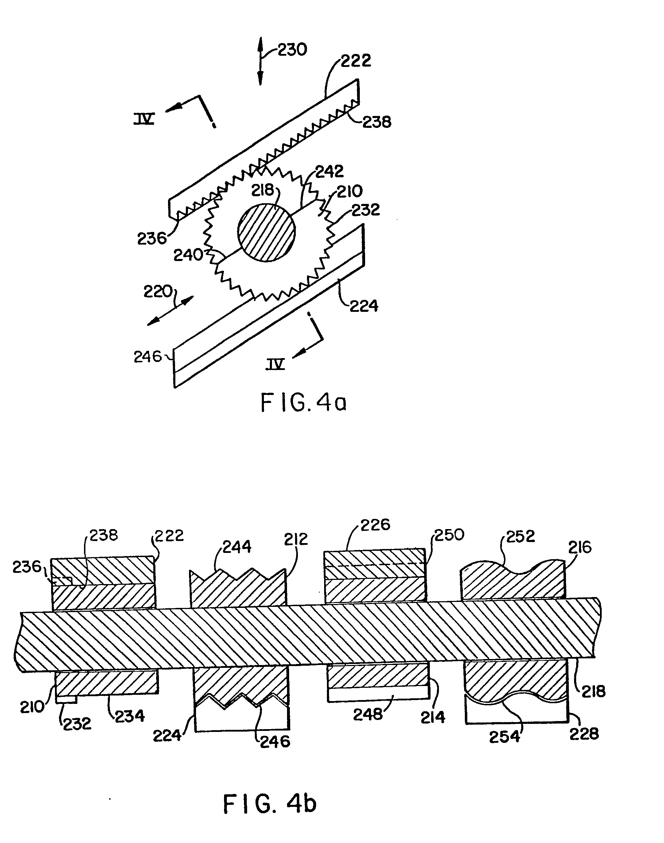

Referring now to Figures 4a and 4b, split bearing members 210, 212, 214, 216 are rotatably mounted on a crankpin 218 for reciprocating linear movement in a direction indicated by arrow 220. The bearing members 210, 212, 214, 216 are in constant engagement with bearing surfaces 222, 224, 226, 228, respectively, formed integrally with a common shuttle (not shown) adpated for reciprocating linear movement in a direction indicated by arrow 230.

The bearing member 210 is provided with gear teeth 232 at one end of the bearing member 210. A smooth circumferential surface 234 extends from the gear teeth 232 to an opposite end of the bearing member 210. The gear teeth 232 mesh with gear teeth 236 provided on the bearing surface 222. As the shuttle reciprocates linearly in the direction indicated by the arrow 230 and the bearing member 210 moves back and forth along the bearing surface 222 in the direction indicated by the arrow 220, the smooth circumferential surface 234 of the bearing member 210 rolls along a flat portion 238 of the bearing surface 222. During such movement of the bearing member 210, the gear teeth 232 on the bearing member 210 cooperate with the gear teeth 236 on the bearing surface 222 to prevent either of two splits 240, 242 in the bearing member 210 from coming into contact with the bearing surface 222, whereby the direct application of pressure on the splits 240, 242 is avoided.

The bearing member 212 is provided with sawtooth-shaped, circumferential grooves 244 which mesh with complementary-shaped, circumferential grooves 246 provided on the bearing surface 224. As the shuttle reciprocates linearly in the direction indicated by the arrow 230 and the bearing member 212 moves back and forth along the bearing surface 224 in the direction indicated by the arrow 220, the grooves 224 on the bearing member 212 cooperate with the grooves 246 on the bearing surface 224 to maintain the proper alignment of the shuttle, thereby reducing friction and piston sideload. The grooves 244, 246 also cooperate to increase the contact area between the bearing member 212 and the bearing surface 224, thereby increasing load-carrying capability.

The bearing member 214 is provided with gear teeth 248 which mesh with gear teeth 250 provided on the bearing surface 226. As the shuttle reciprocates linearly in the direction indicated by the arrow 230 and the bearing member 214 moves back and forth along the bearing surface 226 in the direction indicated by the arrow 220, the gear teeth 248 on the bearing member 214 cooperate with the gear teeth 250 on the bearing surface 226 to prevent either of two splits (not shown) in the bearing member 214 from coming into contact with the bearing surface 226, whereby the direction application of pressure on the splits is avoided. The gear teeth 248, 250 also cooperate to maintain the proper alignment of the shuttle, thereby reducing friction and piston sideload, and to increase the contact area between the bearing member 214 and the bearing surface 226, thereby increasing load-carrying capability. Although the bearing member 214 is in the form of a spur gear, it could, alternatively, be in the form of a helical gear or a bevel gear. If such an alternate form of the bearing member 214 is employed, corresponding changes would, of course, be made in the bearing surface 226.

The bearing member 216 is provided with sinusoidal-shaped, circumferential grooves 252 which mesh with complementary-shaped, circumferential grooves 254 provided on the bearing surface 228. As the shuttle reciprocates linearly in the direction indicated by the arrow 230 and the bearing member 216 moves back and forth along the bearing surface 228 in the direction indicated by the arrow 220, the grooves 252 on the bearing member 216 cooperate with the grooves 254 on the bearing surface 228 to maintain the proper alignment of the shuttle, thereby reducing friction and piston sideload, and to increase the contact area between the bearing member 216 and the bearing surface 228, thereby increasing load-carrying capability.

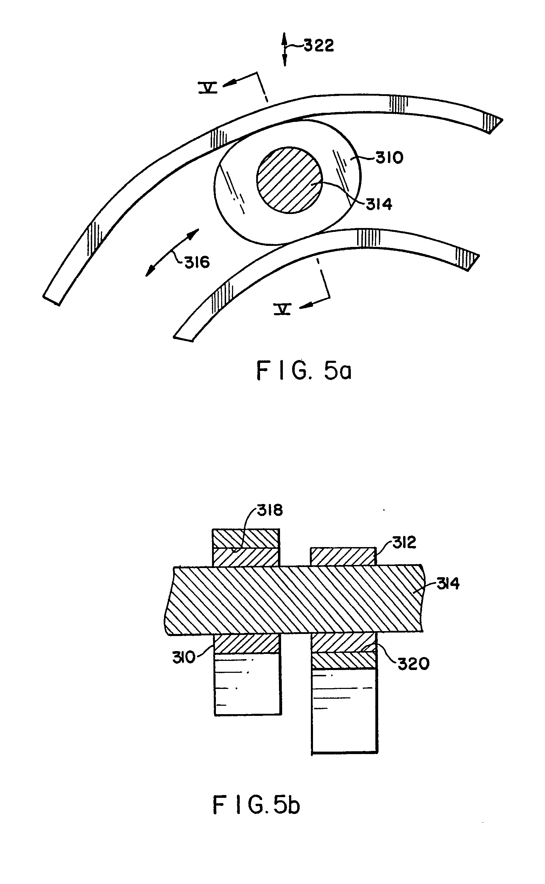

Referring to Figures 5a and 5b, oval bearing members 310, 312 are rotatably mounted on a crankpin 314 for reciprocating arcuate movement in a direction indicated by arrow 316. The bearing members 310, 312 are in constant engagement with curved bearing surfaces 318, 320, respectively, formed integrally with a common shuttle (not shown). As the shuttle reciprocates linearly in a direction indicated by arrow 322, the bearing members 310, 312 slide back and forth along bearing surfaces 318, 320, respectively, in the direction indicated by arrow 316.

It will be understood that the shuttle 16 can have a plurality of pistons at one end and a single piston at its opposite end. Moreover, each end of the shuttle 16 can be provided with more than two pistons, the pistons having the same sizes and shapes or different sizes and shapes.

## Claims

1. A device for converting rectilinear motion to rotary motion or vice versa, having a rotatable crank (44) with a crankpin (50) extending through an opening (56) provided in a shuttle (16), which is mounted for reciprocating linear movement and has at least two bearing surfaces (58, 60) arranged within said opening cooperating with respective bearing members (52, 54) and offset relative to each other in the axial direction of said crankpin (50), characterized in that said opening (56) is defined by a rigid frame portion of said shuttle, (16) so that said bearing surfaces (58, 60) are fixedly located at a given mutual distance, said bearing members (52, 54) being freely rotatively mounted on said crankpin (50) so that each one of said bearing members is in constant positive engagement with a corresponding one of said bearing surfaces, whereby the bearing members form with the shuttle and the rotating crankpin a practically backlash-free transmission structure.

2. The device of claim 1 having guiding means for guiding said shuttle (16) during its reciprocating linear movement, said guiding means including a plurality of cylinders (18, 20, 22, 24) and a plurality of pistons (26, 28, 30, 32), each piston being mounted for reciprocationg linear movement in corresponding one of said cylinders, characterized by fastening means (34) for removably fastening each of said pistons (26, 28, 30, 32) to said shuttle (16).

3. The device of any one of the preceding claims characterized in that said bearing members (52, 54) can be removed and replaced and said bearing surfaces (58, 60) are removably attached to said shuttle (16) so that said bearing surfaces can be removed and replaced, said one bearing member and said one bearing surface forming a first interchangeable set and said another bearing member and said another bearing surface forming a second interchangeable set, whereby the linear speed of said shuttle relative to the angular speed of said crank can be varied by changing said first and second sets.

4. The device of any one of the preceding claims, further characterized in that said one of said bearing members (210, 214) includes a first set of gear teeth (232, 248) and said one of said bearing surfaces (222, 226) includes a second set of gear teeth (236, 250) which meshes with said first set of gear teeth.

5. The device of any one of the claims 1 to 3, further characterized in that said one bearing member (212, 216) includes a plurality of circumferential grooves (244, 252) an said one bearing surface (224, 228) includes a plurality of complementary-shaped circumferential grooves (246, 254).

**Patentansprüche**

1. Vorrichtung zur Umwandlung einer geradlinigen Bewegung in eine Drehewegung oder umgekehrt, mit einer drehbaren Kurbel (44), deren Kurbelzapfen (50) durch eine Oeffmung (56) eines Schiebers (16) hindurchragt, welcher für eine hin- und hergehende Linearbewegung gelagert ist und mindestens zwei in der genannten Oeffnung (56) angeordnete und mit entsprechenden Kraftübertragungselementen (52, 54) zusammenwirkende Kraftübertragungsflächen (58, 60) aufweist, die in Axialrichtung der Kurbelzapfens (50) gegeneinander versetzt sind, dadurch gekennzeichnet, dass die genannte Oeffnung (56) durch einen starren Rahmenabschnitt des Schiebers (16) begrenzt ist und die genannten Kraftübertragungsflächen (58, 60) im gegenseitigen Abstand fest angeordnet sind, wobei die genannten Kraftübertragungslemente (52, 54) direkt und frei drehbar auf dem Lagerzapfen (50) sitzen, so dass jedes Kraftübertragungselement im ständigen Eingriff mit einer entsprechenden Kraftübertragungsfläche ist und die Kraftübertragungselemente mit dem Schieber und dem rotierenden Kurbelzapfen eine praktisch spielfreie Uebertragungskonstruktion bilden.

2. Vorrichtung nach Anspruch 1 mit Führungsmitteln zur Führung des Schiebers (16) während seiner hin- und hergehenden Linearbewegung, wobei die genannten Führungsmittel mehrere Zylinders (18, 20, 22, 24) und mehrere Kolben (26, 28, 30, 32) umfassen und jeder Kolben so angeordnet ist, dass er in einem entsprechenden Zylinder eine hin- und hergehende Linearbewegung ausführung kann, gekennzeichnet durch Befestigungsmittel (34) zur lösbaren Befestigung jedes Kolbens (26, 28, 30, 32) an dem Schieber (16).

3. Vorrichtung nach einem der vorangehenden Ansprüche, dadurch gekennzeichnet, dass die Kraftübertragungsflächen (58, 60) lösbar am Schieber (16) angeordnet sind, so dass dieselben abgenommen und ersetzt werden können, wobei jeweils ein Kraftübertragungselement und eine Kraftübertragungsfläche eine ersten Austauschgruppe und ein anderes Kraftübertragungselement mit einer anderen Kraftübertragungsfläche eine zweite Austauschgruppe bilden, wodurch die Lineargeschwindigkeit bezüglich der Winkelgeschwindigkeit der Kurbel durch Austausch der ersten und zweiten Austauschgruppe verändert werden kann.

4. Vorrichtung nach einem der vorangehenden Ansprüche, dadurch gekennzeichnet, dass eines der Kraftübertragungselemente (210, 214) einen ersten Satz Getriebezähne (232, 248) und die eine Kraftübertragungsfläche (222, 226) einen zweiten Satz Getriebezähne (236, 250) aufweist, die mit dem ersten Satz der Getriebezähne in Eingriff sind.

5. Vorrichtung nach einem der Ansprüche 1 bis 3, dadurch gekennzeichnet, dass eines der Kraftübertragungselemente (212, 216) mehrere Umfangsnuten (224, 252) aufweist und eine Kraftübertragungsfläche (224, 228) mit mehreren komplementär geformten Umfangsnuten (246, 254) versehen ist.

**Revendications**

1. Dispositif destiné à convertir un mouvement rectiligne en un mouvement rotatif ou vice versa, comportant un arbre-manivelle ou vilebrequin (44) avec un maneton (50) s'étendant à travers une ouverture (56) prévue dans une navette (46) qui est montée pour un mouvement linéaire alternatif et comporte au moins deux surfaces de portée (58, 60) disposées à l'intérieur de l'ouverture, coopérant avec les éléments de palier respectifs (52, 54) et décalés entre eux dans la direction axiale du maneton (50), caractérisé en ce que l'ouverture (56) est définie par une portion de châssis rigide de la navette (46, 50) de sorte que les surfaces de portée (58, 60) sont situées de façon fixe à une distance réciproque donnée, ces éléments de portée (51, 54) étant montés directement de façon libre et rotative sur le maneton (50) de sorte que chacun des éléments de portée est en engagement positif constant avec l'une des surfaces correspondantes de portée, moyennant quoi les éléments de portée forment avec la navette et le maneton rotatif une structure de transmission pratiquement exempte de jeu.

2. Dispositif selon la revendication 1, comportant des moyens de guidage pour guider la navette (16) pendant son mouvement linéaire alternatif, ces moyens de guidage comprenant plusieurs cylindres (18, 20, 22, 24) et plusieurs pistons (26, 28, 30, 32), chaque piston étant monté pour le mouvement linéaire alternatif dans l'un des cylindres correspondants, caractérisé par un moyen de fixation (34) pour la fixation amovible de chacun des pistons (26, 28, 30, 32) sur la navette (16).

3. Dispositif selon l'une quelconque des revendications précédentes, caractérisé en ce que les éléments de portée (52, 54) peuvent être enlevés et remplacés et les surfaces de portée (58, 60) sont fixées de façon amovible sur la navette (16) de sorte que les surfaces de portée peuvent être enlevées et replacées, un élément de portée et une surface de portée formant un premier jeu interchangeable et l'autre élément de portée et l'autre surface de portée formant un second jeu interchangeable moyennant quoi on peut faire varier la vitesse linéaire de la navette par rapport à la vitesse angulaire du vilebrequin en changeant les premier et second jeux.

4. Dispositif selon l'une quelconque des revendications précédentes, caractérisé en ce que l'un des éléments de portée (210, 214) comprend un premier jeu de dents d'engrenage (232, 248) et l'une des surfaces de portée (222, 226) comprend un second jeu de dents d'engrenage (236, 250) qui s'engrène dans le premier jeu.

5. Dispositif selon l'une quelconque des revendications 1 à 3, caractérisé en ce que l'un des éléments de portée (212, 216) comprend plusieurs gorges circonférentielles (244, 252) et l'une des surfaces de portée (224, 228) comprend plusieurs gorges circonférentielles de forme complémentaires (246, 254).

FIG. 1

FIG. 2

FIG. 3a

FIG. 3b

FIG. 4a

FIG. 4b

4

F I G. 5a

F I G. 5b